(19) Europäisches Patentamt
European Patent Office
Office européen des brevets

(11) EP 2 003 466 B1

(12) EUROPEAN PATENT SPECIFICATION

(45) Date of publication and mention of the grant of the patent:
**19.02.2014  Bulletin 2014/08**

(51) Int Cl.:
*G01S 5/02* (2010.01)

(21) Application number: **08460024.6**

(22) Date of filing: **12.06.2008**

(54) **Mobile phone localization method**

Verfahren zur Ortung eines Mobiltelefons

Procédé de localisation de téléphone mobile

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.06.2007  PL 38265307**

(43) Date of publication of application:
**17.12.2008  Bulletin 2008/51**

(73) Proprietors:
  • **Szweryn, Eryk**
    **Warszawa (PL)**
  • **Strzalkowski, Lukasz**
    **02-672 Warszawa (PL)**

(72) Inventors:
  • **Szweryn, Eryk**
    **01-517 Warszawa (PL)**
  • **Strzalkowski, Lukasz**
    **02-672 Warszawa (PL)**
  • **Tereszczuk, Radoslaw**
    **02-786 Warszawa (PL)**

(56) References cited:
  **PL-A1- 358 780    US-A1- 2007 042 772**

## Description

TECHNICAL FIELD

The subject of the invention is a method for localisation of a mobile telephone, applied in particular for carrying out services rendered to the owner of the mobile telephone, such as information on shops and services In the immediate area.

BACKGROUND

In a standard cellular network the localisation of a mobile station is achieved typically through a standard location update procedure. Such procedure is executed in several specific situations, for example when the mobile moves from a cell in one location area to a cell in another location area. However a location area is typically defined as a group o cells, thus the accuracy of such localization is sufficient only to make a terminal ended call but insufficient for carrying out additional services.

Several methods for increasing the accuracy of localisatlon of a mobile station have been proposed. One of them is a method for localisation of portable receiving equipment which is disclosed in the patent application PL 358780. According to this known method GSM network comprises a set of high power-level BTS and additionally a set of low power mini BTS used for localization. Said method consists of steps of saving location data of mini BTS into at least one database in at least one switching centre, introducing a mobile telephone Into a coverage area of the low-power mini BTS, measuring by said mobile phone the signal strength received from the low-power mini BTS, registering the signal strength received from the low-power mini BTS which iscomparable with strength of signals comprised on a current list of the strongest signals received by said mobile telephone. Moreover, if the signal strength from said mini BTS is high enough to guarantee a good service quality, according to this known method said mini BTS cell is proposed for the log-in procedure. As said mini BTS has a different location area from neighbouring cells, the location update procedure takes place automatically. After getting connection by the mobile telephone to the GSM network through the low-power mini BTS, information on this event is recorded in the switching centre and, with the aid of a database, the location of the mobile telephone is determined as the location of the low-power mini BTS.

The disadvantage of this known method is the fact, that when a telephone to be localised moves, the time necessary for the telephone to carry out in full the getting connection procedure to the GSM network with the aid of the low-power mini BTS may exceed the time that the telephone being localised spends in the area of a high-power mini BTS, which means that the localization event is not observed. Moreover in the known method if the signal strength from a mini BTS is comparable with others signal received from neighbouring cells, but it does not guarantee enough quality of service to be proposed as a preferred neighbourhood, a localisation event within a range of mini BTS will not occur.

It is also known from US 2007/042772 a wireless communications system for use with an aircraft, comprising an airborne pico cell base station and associated on board equipment mounted on the aircraft, the base station capable of communication with wireless devices used by subscribers on the aircraft and with onboard or ground-based equipment that communicates with one or more ground-based equipment. However It resolves the problem of localization a mobile phone on the moving aircraft the disadvantage of this concept isthat it does not resolve the problem of the localisation of a mobile telephone if an airborne pico cell base station was not transmitting a good quality signal for log-in procedure.

The purpose of the invention Is to increase the speed and accuracy of localisation process of a mobile station, which enables the realization of a scenario impossible to achieve when full execution of the GSM network connection procedure with the aid of a low-power mini BTS is required to locate the telephone. Another purpose is to provide a system for localisation where the localisation event occurs in dedicated places and depends only on the activity of the mobile station user.

SUMMARY

The essence of the method according to the invention relies on the fact that, after introduction of the mobile telephone into a coverage area of a low-power mini BTS, with the aid of a programme operating on the mobile telephone's SIM card, the fact of the mobile telephone's location within a coverage area of a low-power mini BTS is detected.

A method for localization of a mobile telephone with the aid of a cellular network, according to the invention, wherein the cellular network comprises a set of high power-level BTS and a set of low power mini BTS used for localization and having identifiers assigned to them, the method consisting of steps of saving location data of each mini BTS in at least one database in at least one exchange; introducing a mobile telephone into a coverage area of a low-power mini BTS; measuring by said mobile phone the signal strength received from the low-power mini BTS; registering by said mobile phone the signal strength received from the low-power mini BTS which is comparable with the strength of signals comprised on a current list of the strongest signals received by said mobile telephone, is characterized in that it further comprises steps of determining a change in *a* list of the strongest signals received by said mobile telephone; informing a programme operating on *a* SIM card of the mobile telephone on the change in the list of the strongest signals received by said mobile telephone; checking by said programme if the there is a new base station on said list; *carrying out a localization event; said localization event includes the step of* checking by said programme if *an* identifier of said new base station is comprised in a range of identifiers assigned to mini BTS used for localization; informing an exchange about *said* localization event; reading the location of said mini BTS from said database; assigning the location of said mini BTS to said mobile telephone.

Preferably, said informing the exchange about the localization event occurs only in a situation when the value of the signal strength received by the mobile telephone from the low-power mini BTS is higher than the minimum value of the signal strength determined by the programme operating on the SIM card of the mobile telephone.

The invention allows for localisation of a mobile telephone with an accuracy of 20m - 50m.

BRIEF DESCRIPTION OF DRAWINGS

The invention is explained in more detail on the basis of the drawings, in which

Fig. 1 presents a block diagram of the mobile telephone localisation system,
Fig. 2 presents selected elements of the localisation system in an overhead view with the mobile telephone outside a range area of the signal of a low-power mini BTS,
fig. 3 presents selected elements of the localisation system in an overhead view with the mobile telephone located within a range area of the signal of a low-power mini BTS and
Fig. 4 presents selected elements of the mobile telephone.

DESCRIPTION OF PREFFERED EMBODIMENT

In accordance with the method of the invention, the mobile telephone 7 is introduced to a range area of a low-power mini BTS 4. This fact is detected when the level of signal strength received from the low-power mini BTS 4 is comparable, as regards the order of magnitude, with the strength of signal received from the urban high-power BTS 3. This is detected on the basis of changes in the list 10 of the strongest signals received by the mobile telephone 7. The programme 11 operating in the SIM card 12 of the mobile telephone 7 is informed of changes in this list 10. With the aid of the programme 11, the identifier of each new base station in the list 10 is checked. If the identifier comes from a range assigned to base stations used for localisation, information on this event is transmitted to the switching centre 1. On this basis, with the aid of a database 9, the location of the mobile telephone 7 is determined as the location of the low-power mini BTS 4.

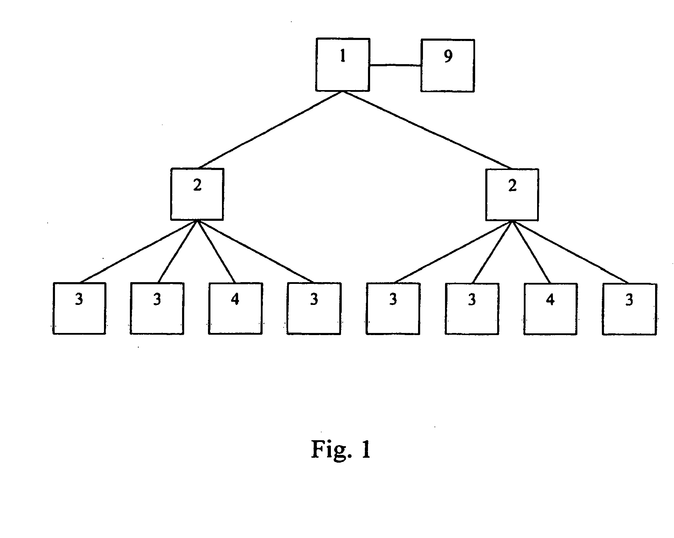

The system presented in fig. 1 contains high-power urban BTS stations 3 and low-power mini BTS stations 4. High-power urban BTS stations 3 and low-power mini BTS stations 4 are connected by permanent links with BSC (Base Station Controller) stations 2. BSC stations 2 are connected by permanent links with an MSC (Mobile Switching Centre) 1. BSC stations 2 are used to control the operation of BTS stations 3 and 4 and transmission of data between BTS stations 3 and 4 and the MSC 1.

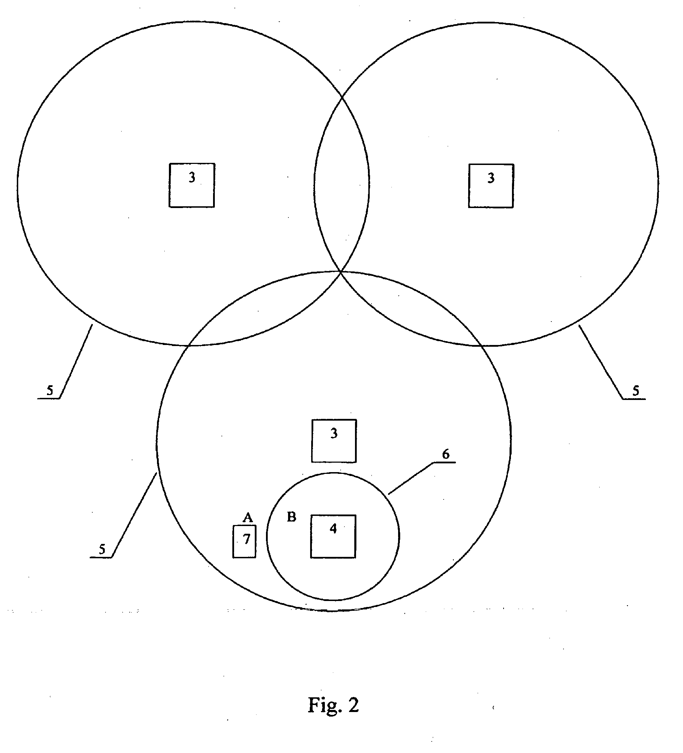

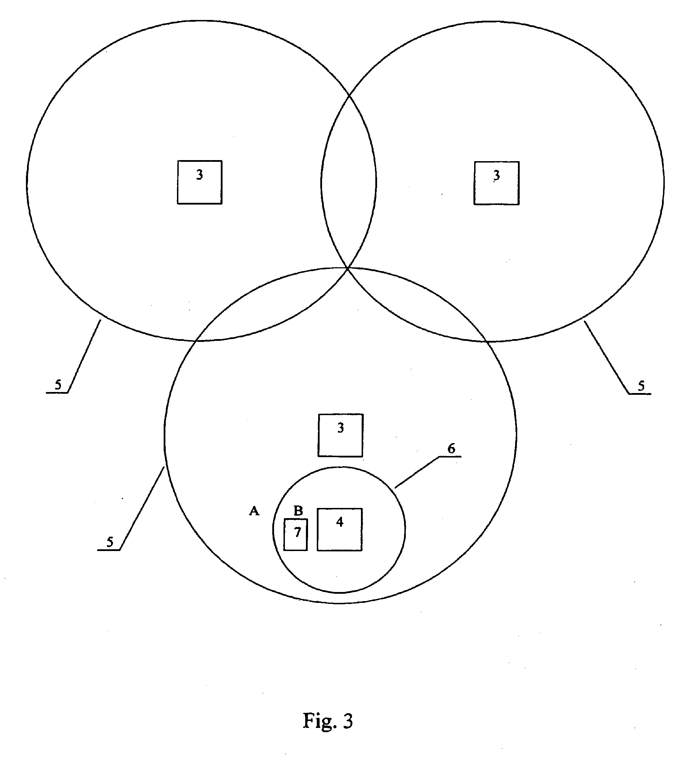

The signal range of a high-power urban BTS 3 in fig. 2 and fig. 3 is indicated by circles marked with 5. The signal range of a high-power mini BTS is indicated by circles marked with 6. The mobile telephone is indicated by the number 7.

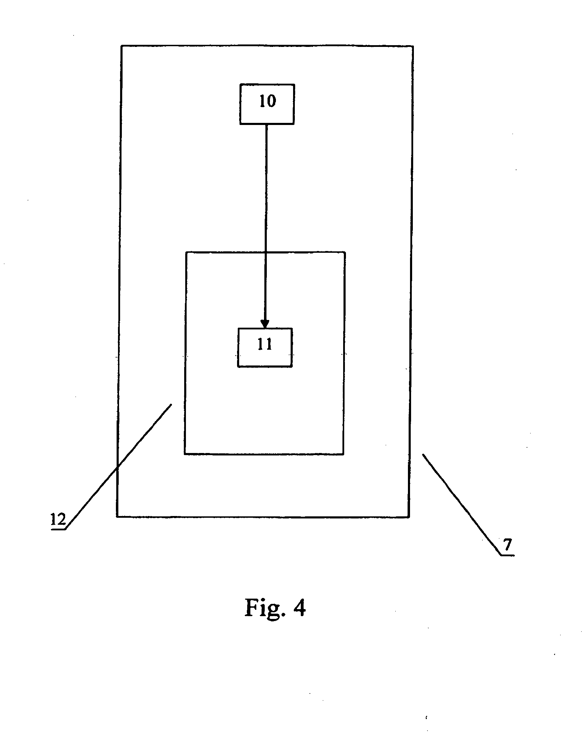

A SIM card 12 is located in the mobile telephone 7 presented in fig. 4. The programme code 11 is located on the SIM card 12. The list 10 of the strongest base station signals received by the telephone is located in the mobile telephone 7.

In locations where mobile telephones 7 are to be localised, mini BTS 4 stations of low transmission strength, up to 10W, are installed. Low-power mini BTS 4 stations used for localisation have their own individual identifiers within the mobile network.

In accordance with the method of the invention, if a mobile telephone 7 is introduced by the user at a distance of 0m - 200m from the low-power mini BTS 4, then the strength $P_{mini}$ received by such a telephone from the low-power mini BTS 4 will, with regard to the small distance between the low-power mini BTS 4 and the telephone 7, be comparable, as regards the order of magnitude, with the strength $P_{urben}$ received from the high-power urban BTS 3.

This results from the fact that the strength $P_{received}$ received by the mobile telephone equipped with an antenna of effective area $A$, located at distance d from the base station, is expressed by the formula:

$$P_{received} = \frac{P_{of\ base\ station} * A}{4 * \pi * d^2}$$

Since strength $P_{received}$ depends in inverse proportion on the square of the distance between the base station and the mobile telephone, and in direct proportion to the power emitted by the base station $P_{of\ base\ station}$, then despite the fact that the transmitting power of high-power urban BTS 3 station is significantly higher that the transmitting power of the low-power mini BTS 4 station, then at a certain appropriately small distance $d$ from the low-power mini BTS 4, the strength of signal $P_{mini}$ received from it is comparable with the strength of signals $P_{urban}$ received from high-power BTS 3 stations.

**Claims**

1. A method for localization of a mobile phone with the aid of a cellular network, wherein the cellular network comprises a set of high power-level BTS (3) and a set of low power mini BTS (4) used for localization and having identifiers assigned to them, the method comprising the steps of:

- saving location data of each mini BTS (4) in at least one database in at least one exchange;
- introducing a mobile phone (7) into a coverage area of a low-power mini BTS;
- measuring by said mobile phone the signal strength received from the low-power mini BTS (4);
- registering by said mobile phone the signal strength received from the low-power mini BTS (4) which is comparable with the strength of signals comprised on a current list of the strongest signals received by said mobile phone (7).

**characterized in that** said method further comprises the steps of

- determining a change in *a* list of the strongest signals received by said mobile phone (7);
- informing a programme **(11)** operating on *a* SIM card **(12)** of the mobile phone **(7)** on the change in the list of the strongest signals received by said mobile phone **(7);**
- checking by said programme **(11)** if there is a new base station on said list;
- *carrying out a localization event;*
- *said localization event included the step of* checking by said programme **(11)** if *an* identifier of said new base station is comprised in a range of identifiers assigned to mini BTS **(4)** used for localization;
- informing an exchange **(1)** about *said* localization event;
- reading the location of said mini BTS **(4)** from said database;
- assigning the location of said mini BTS **(4)** to said mobile phone **(7).**

2. The method according to claim 1, **characterized in that** said informing the exchange **(1)** about the localization event occurs only in a situation when the value of the signal strength received by the mobile phone **(7)** from the low-power mini BTS **(4)** is higher than the minimum value of the signal strength determined by the programme **(11)** operating on the SIM card **(12)** of the mobile phone **(7).**

**Patentansprüche**

1. Die Art und Weise, wie man ein Mobiltelefon mithilfe eines Mobilnetzes lokalisieren kann. Das Mobilnetz besteht aus einem Set von Basisstationen (BTS) mit hoher Leistung (3) und einem Set von Basisstationen mit niedriger Leistung (4), die zur Lokalisierung dienen und zugeschriebene Kennungen haben. Diese Art und Weise umfasst folgende Schritte:

- Speichern der Standortdaten von jeder Mini-BTS (4) in mindestens einer Datenbank in mindestens einer Zentrale;
- Einführung des Mobiltelefons (7) in Versorgungsbereich der Mini-BTS mit niedriger Leistung;
- Messung der Signalstärke empfangen von der Mini-BTS mit niedriger Leistung (4) mithilfe des genannten Mobiltelefons;
- Registrierung durch das genannte Mobiltelefon der Signalstärke empfangen von der Mini-BTS mit niedriger Leistung (4). Die Signalstärke ist mit den Signalstärken vergleichbar, die für die aktuelle Liste der stärksten, durch das Mobiltelefon (7) empfangenen Signale zusammenlegen,

**Dadurch gekennzeichnete** Methode besteht weiter aus folgenden Schritten:

- Bestimmung der Änderung auf der Liste der stärksten, durch das Mobiltelefon (7) empfangenen Signale;
- Informierung des Programms **(11),** das auf der SIM-Karte **(12)** des Mobiltelefons **(7)** funktioniert, über die Änderung auf der Liste der stärksten, durch das Mobiltelefon **(7)** empfangenen Signale;
- Prüfung durch das Programm **(11),** ob es auf der Liste neue Basisstation gibt;
- Durchführung des Lokalisierungsvorgangs;
- Der genannte Lokalisierungsvorgang umfasst die Prüfung durch das Programm **(11),** ob die Kennung der Basisstation im Bereich der der Mini-BTS **(4)** zugeschriebenen Kennungen eingeschlossen ist, die zur Lokalisierung gebraucht werden;
- Informierung der Zentrale **(1)** über den genannten Lokalisierungsvorgang;
- Ablesung der Lage der Mini-BTS **(4)** aus der genannten Datenbank;
- Zuschreibung der Lage der genannten Mini-BTS **(4)** dem genannten Mobiltelefon **(7).**

2. Die Methode nach der Bedingung Nr. 1, **gekennzeichnet dadurch, dass** die Zentrale **(1)** über den Lokalisierungsvorgang nur dann informiert wird, wenn der Wert der Signalstärke, das durch das Mobiltelefon **(7)** aus der Mini-BTS mit niedriger Leistung **(4)** empfangen wird, höher als der minimale, durch das auf der SIM-Karte **(12)** des Mobiltelefons **(7)** funktionierende Programm **(11)** bestimmte Signalstärkenwert ist.

**Revendications**

1. Procédé pour la localisation d'un téléphone mobile à l'aide d'un réseau cellulaire, dans lequel le réseau cellulaire comprend un ensemble de BTS d'un niveau de puissance élevé (3) et un ensemble de mini BTS d'un niveau de puissance faible (4) utilisés pour la localisation et ayant des identificateurs qui leur sont attribués, le procédé comprenant les étapes consistant à:

   - sauvegarder des données de localisation de chaque mini BTS (4) dans au moins une base de données dans au moins un échange;
   - introduire un téléphone mobile (7) dans une zone de couverture d'une mini BTS de faible puissance;
   - mesurer par ledit téléphone mobile la force du signal reçu de la mini BTS de faible puissance (4);
   - enregistrer par ledit téléphone mobile la force du signal reçu de la mini- BTS de faible puissance (4) qui est comparable à la force des signaux compris sur une liste actuelle des signaux les plus forts reçus par ledit téléphone mobile (7),

   **caractérisé en ce que** ledit procédé comprend en outre les étapes consistant à

   - déterminer un changement dans une liste des signaux les plus forts reçus par ledit téléphone mobile (7);
   - informer un programme (11) opérant sur une carte SIM (12) du téléphone mobile (7) sur la modification de la liste des signaux les plus forts reçus par ledit téléphone mobile (7);
   - vérifier par ledit programme (11) s'il y a une nouvelle station de base sur ladite liste;
   - réaliser un événement de localisation;
   - ledit événement de localisation comprend l'étape de vérification de ce programme (11) si un identifiant de ladite nouvelle station de base est comprise dans une plage d'identifiants assignés à une mini BTS (4) utilisés pour la localisation;
   - informer d'un échange (1) sur ladite localisation de l'événement;
   - lire la localisation de ladite mini- BTS (4) à partir de ladite base de données;
   - affecter la localisation de ladite mini- BTS (4) audit téléphone mobile (7).

2. Le procédé selon la déclaration 1, **caractérisé en ce que** ladite information de l'échange (1) sur l'événement de localisation se produit seulement dans une situation où la valeur de l'intensité du signal reçu par le téléphone mobile (7) à partir de la mini- BTS de faible puissance (4) est supérieure à la valeur minimale de l'intensité du signal déterminée par le programme (11) opérant sur la carte SIM (12) du téléphone mobile (7).

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 358780
- US 2007042772 A